(19) Europäisches Patentamt
European Patent Office
Office européen des brevets

(11) **EP 4 383 382 A1**

(12) **EUROPEAN PATENT APPLICATION**

(43) Date of publication:
**12.06.2024 Bulletin 2024/24**

(51) International Patent Classification (IPC):
*H01M 8/103* (2016.01)   *H01M 8/18* (2006.01)
*H01M 10/0525* (2010.01)   *H01M 50/403* (2021.01)
*H01M 50/414* (2021.01)

(21) Application number: **23214893.2**

(22) Date of filing: **07.12.2023**

(52) Cooperative Patent Classification (CPC):
**H01M 8/103; H01M 8/188; H01M 10/0525; H01M 50/403; H01M 50/414**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2022 US 202263386420 P**
**01.12.2023 US 202318526152**

(71) Applicant: **Standard Energy Inc.**
**Yuseong-gu, Daejeon 34014 (KR)**

(72) Inventors:
• **LEE, Dongyoung**
**34014 Daejeon (KR)**
• **KIM, Dongheun**
**34014 Daejeon (KR)**

(74) Representative: **Vossius & Partner**
**Patentanwälte Rechtsanwälte mbB**
**Siebertstrasse 3**
**81675 München (DE)**

(54) **METHOD FOR MANUFACTURING POLYBENZIMIDAZOLE-BASED SEPARATOR, POLYBENZIMIDAZOLE-BASED SEPARATOR MANUFACTURED THEREBY, AND SECONDARY BATTERY INCLUDING THE SAME**

(57) Disclosed is a method for preparing a polybenzimidazole solution, the method including: preparing a polybenzimidazole (PBI) precursor having an average particle size of 300 μm or smaller; and dissolving the PBI precursor in an amide-based organic solvent under a temperature condition of 140°C or higher and/or a pressure condition of 0.1 MPa or higher.

FIG. 2A

## Description

## BACKGROUND

### Field

The present disclosure relates to a method for manufacturing a polybenzimidazole-based separator, a polybenzimidazole-based separator manufactured thereby, and a secondary battery including the same.

### Description of Related Art

The global economic growth accompanied by global warming continues increase the urgency of a need for renewable and sustainable energy systems based on renewable energy, e.g., solar and wind energy. To enhance the stability of grid networks against fluctuations due to intermittent availability such forms of energy, advances in energy storage systems (ESS) are used for storing surplus electricity, which may be delivered to end customers or to power grids when needed. Among others, ESS based on electrochemical energy, e.g., rechargeable or secondary batteries, may provide cost effective and clean forms of energy storage solutions. The electrochemical energy storage system is a secondary battery in a broad sense. Examples of electrochemical energy storage systems include lithium-ion, lead-acid, sodium-sulfur and redox-flow batteries. Different storage times are needed for different applications: short-term storage, medium-term storage and long-term storage. The different types of electrochemical energy storage systems have different physical and/or chemical properties. Factors that determine the suitability for a particular application of the electrochemical energy storage systems include investment cost, power, energy, lifetime, recyclability, efficiency, scalability and maintenance cost, to name a few. Competing factors are weighed in the selection and design of a suitable electrochemical storage system. Generally, the secondary battery includes two electrodes, an electrolyte, and a separator (or ion exchange membrane). Each of the above components may affect the performance of the secondary battery.

Polybenzimidazole (PBI) is a glassy thermoplastic resin with high thermal stability and chemical resistance, and is known to have properties suitable for migrating cations, hydrogen, and water. Thus, there have been attempts to use a polybenzimidazole-based separator as a separator for the secondary battery.

A polybenzimidazole solution preparation process to manufacture the polybenzimidazole-based separator includes a process of dissolving a polybenzimidazole precursor in an amide-based organic solvent (e.g., DMAc). However, the polybenzimidazole precursor has very low solubility in the organic solvent. As a result, a preparation efficiency of polybenzimidazole solution and a process efficiency when manufacturing the separator using polybenzimidazole are reduced. Thus, mass production of the polybenzimidazole-based separator is not achieved. Thus, the polybenzimidazole-based separator has not been commercialized. It is necessary to develop a scheme to solve this problem.

## SUMMARY

A purpose of the present disclosure is to provide a manufacturing for a polybenzimidazole-based separator in which in preparing a polybenzimidazole solution, the solubility of the polybenzimidazole precursor in the organic solvent is improved, thereby increasing the preparation efficiency of the polybenzimidazole solution, and, thus, the process efficiency in manufacturing the polybenzimidazole-based separator using the polybenzimidazole solution.

Furthermore, a purpose of the present disclosure is to provide a polybenzimidazole-based separator manufactured based on the above method, in which the polybenzimidazole-based separator has excellent ion exchange characteristics.

Furthermore, a purpose of the present disclosure is to provide a secondary battery including the polybenzimidazole-based separator manufactured based on the above method, wherein the performance of the secondary battery is improved due to the separator, and the secondary battery operates stably even under harsh conditions.

In the present disclosure, an example in which the secondary battery is embodied as a redox flow battery or a sealed redox battery using a redox couple is described. However, the secondary battery which the separator in accordance with the present disclosure is applied is not limited thereto.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

A first aspect of the present disclosure provides a method for preparing a polybenzimidazole solution, the method comprising: preparing a polybenzimidazole (PBI) precursor having an average particle size of 300 $\mu$m or smaller; and dissolving the PBI precursor in an amide-based organic solvent under a temperature condition of 140°C or higher and/or a pressure condition of 0.1 MPa or higher.

According to some embodiments of the first aspect, the average particle size of the PBI precursor is in a range of 200 to 300 $\mu$m.

According to some embodiments of the first aspect, dissolving the PBI precursor in the amide-based organic solvent includes dissolving the PBI precursor in the amide-based organic solvent under a temperature condition of 140 to 200°C.

According to some embodiments of the first aspect, dissolving the PBI precursor in the amide-based organic solvent includes dissolving the PBI precursor in the amide-based organic solvent under a pressure condition of 0.1 to 0.2 MPa.

According to some embodiments of the first aspect, a maximum solubility of the PBI precursor in the amide-based organic solvent is in a range of 8 to 20% by weight, based on 100% by weight of the amide-based organic solvent.

According to some embodiments of the first aspect, the organic solvent includes dimethylacetamide.

A second aspect of the present disclosure provides a method for manufacturing a polybenzimidazole-based separator, the method comprising: dissolving a polybenzimidazole (PBI) precursor in an amide-based organic solvent to produce a polybenzimidazole-containing solution; coating the polybenzimidazole-containing solution on a base substrate to form a liquid film thereon; removing the organic solvent from the liquid film in a drying manner to convert the liquid film to a solid film; and removing the solid film from the base substrate to obtain a polybenzimidazole-based separator as the solid film, wherein the average particle size of the PBI precursor is equal to or smaller than 300 $\mu$m, wherein dissolving the PBI precursor in the amide-based organic solvent is carried out under a temperature condition of 140°C or higher and/or a pressure condition of 0.1 MPa or higher.

According to some embodiments of the second aspect, a thickness of the polybenzimidazole-based separator is in a range of 2 to 30 $\mu$m.

According to some embodiments of the second aspect, the base substrate is one of a PE (polyethylene) substrate, a PET (polyethylene terephthalate) substrate, a PP (polypropylene) substrate, a PTFE (polytetrafluoroethylene) substrate, an ePTFE (expanded polytetrafluoroethylene) substrate, a PI (polyimide) substrate, and a PEEK (polyetheretherketone) substrate.

A third aspect of the present disclosure provides a polybenzimidazole-based separator manufactured by the method for manufacturing a polybenzimidazole-based separator as described above.

A fourth aspect of the present disclosure provides a secondary battery comprising a polybenzimidazole-based separator manufactured by the method for manufacturing a polybenzimidazole-based separator as described above.

According to the method for preparing the polybenzimidazole solution of the present disclosure, the solubility of the polybenzimidazole precursor in the organic solvent may be improved, thereby increasing the preparation efficiency of polybenzimidazole, and thus, the process efficiency in manufacturing the polybenzimidazole-based separator using the polybenzimidazole solution.

Furthermore, the polybenzimidazole-based separator manufactured based on the method for preparing the polybenzimidazole solution of the present disclosure has excellent ion exchange characteristics.

Furthermore, the secondary battery including the polybenzimidazole-based separator manufactured based on the method for preparing the polybenzimidazole solution of the present disclosure has improved performance due to the separator having the excellent ion exchange characteristics, and operates stably even under harsh conditions.

Effects of the present disclosure are not limited to the effects mentioned above, and other effects not mentioned will be clearly understood by those skilled in the art from the description below.

In addition to the above effects, specific effects of the present disclosure are described together while describing specific details for carrying out the present disclosure.

## BRIEF DESCRIPTION OF DRAWINGS

FIG. 1 is a schematic illustration of an example redox flow battery.

FIG. 2A is a schematic illustration of a sealed redox battery, according to some embodiments.

FIG. 2B is a schematic illustration of a sealed redox battery including a plurality of sealed redox battery cells in a stacked structure, according to some embodiments.

FIG. 2C is a schematic illustration of a sealed redox battery including a plurality of sealed redox battery cells in a stacked structure, according to some further embodiments.

**EP 4 383 382 A1**

FIG. 2D is a schematic illustration of a sealed redox battery including a plurality of sealed redox battery cells in a cylindrically stacked structure, according to some still further embodiments.

## DETAILED DESCRIPTIONS

Advantages and features of the present disclosure, and a method of achieving the advantages and features will become apparent with reference to embodiments described later in detail together with the accompanying drawings. However, the present disclosure is not limited to the embodiments as disclosed under, but may be embodied in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

For simplicity and clarity of illustration, elements in the drawings are not necessarily drawn to scale. The same reference numbers in different drawings represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, an angle, a number, etc. disclosed in the drawings for illustrating embodiments of the present disclosure are illustrative, and the present disclosure is not limited thereto.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

It will be understood that when an element or layer is referred to as being "connected to", or "connected to" another element or layer, it may be directly on, connected to, or connected to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be embodied differently, a function or an operation specified in a specific block may occur in a different order from an order specified in a flowchart. For example, two blocks in succession may be actually performed substantially concurrently, or the two blocks may be performed in a reverse order depending on a function or operation involved.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Spatially relative terms, such as "beneath," "below," "lower," "under," "above," "upper," and the like, may be used herein for ease of explanation to describe one element or feature's relationship to another element or feature as illustrated in the figures. It will be understood that the spatially relative terms are intended to encompass different orientations of the device in use or in operation, in addition to the orientation depicted in the figures. For example, when the device in the drawings may be turned over, elements described as "below" or "beneath" or "under" other elements or features would then be oriented "above" the other elements or features. Thus, the example terms "below" and "under" may encompass both an orientation of above and below. The device may be otherwise oriented for example, rotated 90 degrees or at other orientations, and the spatially relative descriptors used herein should be interpreted accordingly.

The features of the various embodiments of the present disclosure may be partially or entirely combined with each other, and may be technically associated with each other or operate with each other. The embodiments may be embodied independently of each other and may be embodied together in an association relationship.

In interpreting a numerical value, the value is interpreted as including an error range unless there is no separate explicit description thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

Further, the term 'or' means 'inclusive or' rather than 'exclusive or'. That is, unless otherwise stated or clear from the context, the expression that 'x uses a or b' means any one of natural inclusive permutations.

The terms used in the description below have been selected as being general and universal in the related technical field. However, there may be other terms than the terms depending on the development and/or change of technology, convention, preference of technicians, etc. Therefore, the terms used in the description below should not be understood as limiting technical ideas, but should be understood as examples of the terms for illustrating embodiments.

Further, in a specific case, a term may be arbitrarily selected by the applicant, and in this case, the detailed meaning thereof will be described in a corresponding description section. Therefore, the terms used in the description below should be understood based on not simply the name of the terms, but the meaning of the terms and the contents throughout the Detailed Descriptions.

As discussed above, competing factors that are weighed in the selection and design of a suitable electrochemical energy storage system for a particular application includes investment cost, power, energy, lifetime, recyclability, efficiency, scalability and maintenance costs, among others. Among various electrochemical energy storage systems, redox flow batteries (RFBs) are considered to be promising for stationary energy storage. RFBs are electrochemical energy conversion devices, that exploit redox processes of redox species dissolved in a solution. The solution is stored in external tanks and introduced into the RFB cell when needed. Some of the advantageous features of the RFB technology are: independent scalability of power and energy, high depth of discharge (DOD), and reduced environmental impact. Such features allow for wide ranges of operational powers and discharge times, making RFBs desirable for storage of electricity generated from renewable sources.

Particular disadvantages of some secondary batteries known in the art, such as a lithium-ion batteries, include excessive heat and internal pressure generation during operation thereof. To mitigate these effects, some secondary batteries employ a gap between the battery cells and/or a separate cooling device. Advantageously, in batteries according to some embodiments disclosed herein, heat and pressure generation is significantly lower, which in turn lowers the risk of an explosion, such that a gap or a cooling device between the battery cells may not be needed, thereby enabling compact integration of the battery cells and batteries themselves.

Various batteries use a bus bar to electrically connect the battery cells and/or the batteries themselves. For compact integration, there is a need to reduce the amount of space occupied by the bus bars by efficiently disposing them. In addition to electrically connecting the battery cells and batteries, there is a separate need for physically and mechanically holding the battery cells or batteries together in an efficient manner. To address these and other needs, various embodiments disclosed herein provide bus bars to enable high-density integration of the battery cells and/or batteries, and an energy storage device including the same. In addition, embodiments disclosed herein provide a battery that is easy to maintain after installation and an energy storage device including the same.

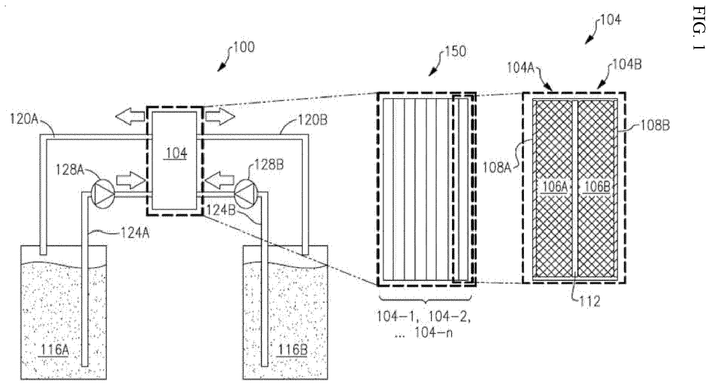

FIG. 1 is a schematic illustration of an example redox flow battery (RFB). The RFB 100 includes a battery cell 104. The battery cell 104 has a first half cell 104A and a second half cell 104B separated from each other by a separator or an ion exchange membrane 112. The first half cell 104A includes a positive electrolyte reservoir 106A having disposed therein a first or positive electrolyte and a positive electrode, and the second half cell 104B includes a negative electrolyte reservoir 106B having disposed therein a second or negative electrolyte and a negative electrode. The positive electrode is electrically connected to a positive-electrode current collector 108A and the negative electrode is electrically connected to a negative-electrode current collector 108B. The positive electrolyte reservoir 106A is in fluidic communication with and physically connected to a positive electrolyte tank 116A, and the negative electrolyte reservoir 106B is in fluidic communication with and physically connected to a negative electrolyte tank 116B. In operation, the positive electrolyte is circulated between the positive electrolyte tank 116A and the positive electrolyte reservoir 106A via outlet and inlet conduits 120A and 124B, as shown by arrows using a positive electrolyte pump 128A. Similarly, the negative electrolyte is circulated between the negative electrolyte tank 116B and the negative electrolyte reservoir 106B via outlet and inlet conduits 120B and 124B as shown by arrows using a negative electrolyte pump 128B.

In some configurations, a plurality of battery cells 104-1, 104-2,..., 104-n are stacked to constitute a RFB cell 150, where each cell is configured in a similar manner as the battery cell 104. The plurality of battery cells 104-1, 104-2,..., 104-n include respective positive electrolyte reservoirs 106A which may be in fluidic communication with each other, and respective negative electrolyte reservoirs 106B which may be in fluidic communication with each other. The positive electrolyte reservoirs 106A are connected to each other and in turn are in fluidic communication with the positive electrolyte tank 116A, and the negative electrolyte reservoirs 106B are connected to each other and in turn are in fluidic communication with the negative electrolyte tank 116B.

Compared to other electrochemical storage technologies such as lithium-ion, lead-acid and sodium-sulfur batteries, RFBs offer several advantages including separation of power conversion from energy storage, thus allowing for independent power and energy scaling. For example, RFBs may be adapted in a flexible and decentralized manner depending on the application, and be scaled to provide power and energy ranging from a few kW/kWh for e.g., domestic storage, up to systems of several to tens of MW/MWh for grid storage. In addition, unlike fuel cells, reactions in RFBs are reversible, thereby enabling the same cfell to operate as converter of electricity into chemical energy and vice-versa. RFBs operate by changing the metal ion valence, without consuming ion metals, thereby allowing for long cycle service life. Cell temperature may be controlled relatively easily by regulating the electrolyte flow, in part due to the relatively high thermal mass of electrolytes. The state of charge (SOC) may be easily monitored through the cell voltage while very deep depth of discharge (DOD) may be achieved.

Despite various advantages of RFBs, their commercialization has not been widespread relative to other electrochemical storage technologies, despite relatively large capital, research and development investments that have been made in the technology through several decades. In particular, notwithstanding the recent surge in battery demand for ESS application and the apparent fitness of RFBs for such application including higher safety against fire and explosion, a widespread commercialization has yet to be realized, suggesting that there remain long felt need but substantial obstacles to commercialization of RFBs. The inventors have recognized several such obstacles, including relatively low reliability, low efficiency, large system footprint and high system complexity.

First obstacle to widespread commercialization of RFBs relates to relatively high complexity and the associated reliability issues of RFBs such as the RFB 100 as described above with respect to FIG. 1. As described above, RFBs include multiple conduits 120A, 120B, 124A, and 124B for transferring and receiving the electrolytes to and from the battery cell 104, the pumps 128A and 128B for circulating the electrolytes, and the tanks 116A, and 116B for storing therein the electrolytes. Due to the relatively high complexity, various connection points associated with the conduits 120A, 120B, 124A, and 124B between the battery cell 104 and the tanks 116A, and116B may lead to reliability failures, e.g., leakage. The likelihood and frequency of failures increases proportionally with the number of such conduits, which scales with the size of the ESS. When they occur, the failures lead to unscheduled repairs as well as safety hazard. In addition, reducing the likelihood of such failures and ensuring uninterrupted operation through preventive maintenance leads to added operating cost.

Second obstacle to widespread commercialization of RFBs relates to relatively low efficiency of RFBs. One cause of the relatively low efficiency relates to the energy expended in circulating the electrolytes. For example, the electrolyte for vanadium-based RFBs includes sulfuric acid, which may have relatively high viscosity. Circulating an electrolyte, especially an electrolyte having a relatively high viscosity, through fine porous structure of randomly oriented carbon fiber felt-based electrode may expend relatively high amounts of external energy, thereby lowering the extrinsic efficiency of the RFBs. The lower extrinsic efficiency of the RFB system is one of the main reasons for lower commercial competitiveness relative to competing secondary battery technologies such as lithium-ion battery (LIB) technology.

Third obstacle to widespread commercialization of RFBs relates to relatively lower power density and energy density compared to other electrochemical storage technologies, hindering their mobile applications. As described herein, power and energy densities refer to the power output and energy storage, respectively, of a storage device relative to the total volume of the energy storage device. Thus, for an RFB, the power and energy densities refer to ratios of power output and energy storage to the total volume including the cell volume, the tank volumes and the volumes of conduits for transferring the electrolytes. To partly compensate the lower power and energy densities, RFBs often have cell active areas and membranes that are relatively large, resulting in increased cell dimensions, which may in turn cause high transverse gradients of electrolytes inside the electrolyte reservoirs 116A and 116B. Consequently, the average current density and nominal current of RFBs may be substantially lower compared to the maximum theoretical values based on uniform maximum current density. In addition, the overall system-level space efficiency is further reduced by the need for a circulation system including separate tanks and conduits.

Fourth obstacle to widespread commercialization of RFBs relates to the system complexity, which may be comparable to that of a chemical plant. The complexity of designing the RFB systems is high, which in turn increases the development cycle, which in turn results in significantly slow technology development. In addition, the system complexity is labor- and capital-intensive and requires a high level of expertise in installation, maintenance and demolition at an ESS site. The system complexity deters consumers due to the potential need for increased staffing and training required to build and maintain the systems, as well as the accompanying increase in the overall cost.

To address these and other limitations while retaining most of the benefits conferred by the RFBs, the present disclosure is directed to a sealed redox battery which may not be connected to a separate electrolyte tank. In addition, the present disclosure is additionally directed to a secondary battery including a bus bar that enables efficient integration of a plurality of redox battery cells which may be sealed. However, the present disclosure is not limited to an example in which the secondary battery is embodied as the battery type as described above. Further, it will be appreciated that the inventive concepts including the sealed redox battery and the bus bar may be practiced individually or in combination with each other.

Sealed redox battery

In an aspect of the present disclosure, various embodiments of a redox battery disclosed herein are directed to a redox battery. The redox battery according to some embodiments retain the advantages of RFBs while at least partly overcoming or mitigating some of all of the commercialization obstacles of RFBs as discussed above. In particular, while using redox couples that participate in redox reactions, unlike some RFBs, embodiments of a redox battery disclosed herein include a sealed redox battery cell and do not have a separate electrolyte tank connected to the redox battery cell, nor an electrolyte circulating device such as a pump for supplying the electrolyte from outside of the redox battery cell.

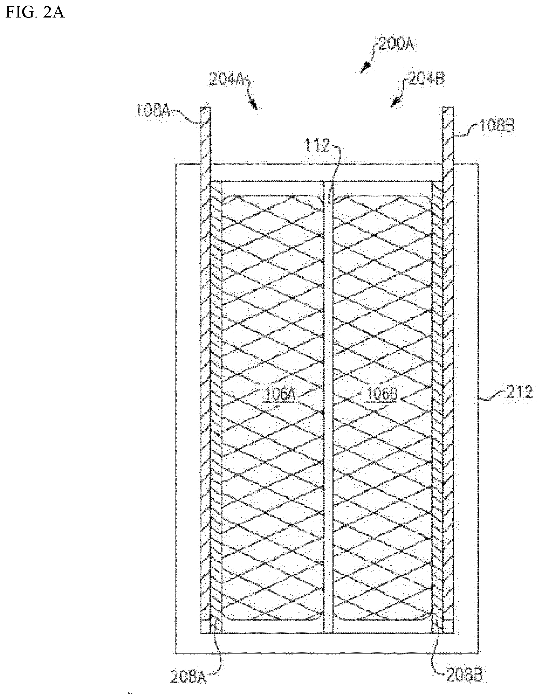

FIG. 2A is a schematic illustration of a sealed redox battery, according to some embodiments. The illustrated sealed redox battery 200A includes a first half cell 204A and a second half cell 204B. The first half cell 204A includes a positive electrolyte reservoir 106A having disposed therein a first or positive electrolyte contacting a positive electrode. The first electrolyte has dissolved therein a first redox couple configured to undergo a first redox half reaction. The second half cell 204B includes a negative electrolyte reservoir 106B having disposed therein a second or negative electrolyte contacting a negative electrode. The second electrolyte has dissolved therein a second redox couple configured to undergo a second redox half reaction. The positive and negative electrolyte reservoirs 106A and 106B respectively define reaction spaces for the respective half reactions. The sealed redox battery 200A additionally includes an ion exchange membrane or separator 112 separating the positive electrolyte reservoir 106A and the negative electrolyte reservoir 106B from each other. The positive electrode is electrically connected to the positive-electrode current collector 108A and the negative electrode is electrically connected to a negative-electrode current collector 108B. In some implementations, a first bipolar plate 208A is interposed between the positive-electrode current collector 108A and the positive electrolyte reservoir 106A, and a second bipolar plate 208B is interposed between the negative-electrode current collector 108B and the negative electrolyte reservoir 106B.

Unlike conventional RFBs, in the sealed redox battery 200A according to some embodiments, the first half cell 204A, the second half cell 204B and the ion exchange membrane or separator 112 define a redox battery cell that is enclosed or sealed in part by a casing or a frame 212 surrounding at least four sides of the battery cell. The illustrated sealed redox battery 200A depicts a cross-sectional view and therefore only upper and lower sides of the casing 212 are shown. However, it will be understood that the casing 212 continuously surrounds the upper, lower, front and back sides of the illustrated battery cell. In addition, the first and second bipolar plates 208A and 208B contact the casing 212 at left and right edges or lips thereof, respectively, to enclose and/or seal the battery cell in the sealed space defined by the casing 212 and the first and second bipolar plates 208A and 208B. Thus, the enclosed and/or sealed frame or casing 212, the first bipolar plate 208A and the second bipolar plate 208B define an enclosed or sealed volume, which is divided into two spaces via the separator 112, namely the negative electrolyte reservoir 106B accommodating the negative electrode therein and the positive electrolyte reservoir 106A accommodating the positive electrode therein. The volume sealed by the casing 212 and the first and second bipolar plates 208A and 208B is such that under normal operation, internal contents thereof may not be physically accessible from the outside. That is, the positive and negative electrolytes are not in fluidic communication with external containers such as electrolyte tanks. The casing 212 and the first and second bipolar plates 208A and 208B may seal the redox battery 200A hermetically and/or permanently. Such configuration is in contrast to conventional redox flow batteries, in which the redox battery cell is in fluidic communication with external tanks. That is, in the sealed redox battery 200A, unlike the RFB 100 as described above with respect to FIG.

1, neither of the positive electrolyte reservoir 106A or the negative electrolyte reservoir 106B in the enclosed cell is in fluidic communication with or physically connected to a separate electrolyte tank that stores a respective one of the first or second electrolytes. As such, substantially the entire volume of the positive and negative electrolytes is stored within the redox battery cell and sealed and enclosed by the casing 212 and the first and second bipolar plates 208A and 208B. That is, the first electrolyte reservoir 106A stores substantially the entire volume of the first electrolyte for the first half cell 204A, and the second electrolyte reservoir 106B stores substantially the entire volume of the second electrolyte for the second half cell 204B. In part because the sealed redox battery 200A is not connected to a separate storage tank, unlike the RFB 100 as illustrated in FIG. 1, the sealed redox battery 200A advantageously does not include the conduits 120A, 120B, 124A, and 124B (FIG. 1) for transferring and receiving the electrolytes to and from the redox battery cell, nor the pumps 128A and 128B (FIG. 1) for circulating the electrolytes.

As described above, a notable structural distinction of the sealed redox battery 200A is the omission of the pumps 128A and 128B (FIG. 1). Instead, the sealed redox battery 200A according to some embodiments are configured such that the first and second electrolytes self-circulate within respective ones of the positive electrolyte reservoir 106A of the first half cell 204A and the negative electrolyte reservoir 106B of the second half cell 204B. In various configurations, self-circulation of the first and second electrolytes is caused by one or more of: an osmotic pressure difference between the first and second electrolyte reservoirs; a density change in one or both of the first and second electrolytes; diffusion or migration of one or both of the first and second electrolytes; an affinity of one or both of the first and second electrolytes toward a respective ones of the first and second electrodes; the first and second redox half reactions; and thermal expansion or contraction of one or both of the first and second electrolytes.

The inventors have discovered that self-circulation is effective to provide stability of the power and energy output when the thickness of each of the positive and negative electrolyte reservoirs 106A and 106B in the cross-sectional view of FIG. 2A does not exceed 20 cm, 15 cm, 10 cm, 5 cm, 2 cm, 1 cm or a value in a range defined by any of these values.

Still referring to FIG. 2A, the casing 212 is made of a suitable corrosion resistant material to accommodate the positive and negative electrolytes, which may be highly acidic. In addition to providing corrosion resistance, the casing 212 may be a rigid casing to provide mechanical support for the sealed redox battery 200A. In some embodiments, at least portions of the casing 212 according to some embodiments may be made of a flexible material that is configured to deform to cope with changes in internal pressure within the positive and negative electrolyte reservoirs 106A and 106B. The increase in internal pressure may be caused, e.g., due to various effects described infra with respect to pressure-controlled sealed redox batteries. In configurations where only portions of the casing are made of a flexible material, remaining portions may be made of a rigid material. The flexible portions may be configured to, e.g., expand in response to an increase in pressure such that one or both of the positive and negative electrolyte reservoirs 106A and 106B may cope with increase in respective volume that is greater than 0.1%, 0.2%, 0.5%, 1%, 2%, 5%, 10%, 20%, or 50%. The suitable material of the casing 212 may include polyvinyl chloride (PVC), polyethylene (PE), polystyrene (PS), polypropylene (PP), polycarbonate (PC), ABS, reinforced plastics, and the like.

The sealed redox battery 200A as configured as described above provides various technical and commercial advantages. For example, various reliability failures associated with the conduits, e.g., pipe joints, between the redox battery cell and the tanks, as well as pumps for circulating the electrolytes, are substantially reduced or eliminated, which in turn reduces unscheduled repairs as well as safety hazard and operational cost associated with operation of the sealed redox battery 200A. In addition, extrinsic efficiency is substantially improved by obviating a need to circulate the electrolyte between the redox battery cell and the tanks using pumps, as described above with respect to the RFB 100 (FIG. 1). The inventors have realized that depending on the size of the system, the sealed redox battery 200A may improve the power or energy density by up to 2 to 50 times compared to conventional RFBs by obviating a need to circulate the electrolyte between the cell and the electrolyte tanks. As described above, a power or energy density refers to the power or energy output of a storage device relative to the total volume of the energy storage device, respectively. Thus, for a sealed redox battery, the power or energy density refers to a ratio of the power or energy output to the total volume of the sealed the redox battery, respectively. In addition, the space efficiency is greatly improved by the omission of a circulation system including separate tanks, pumps and conduits. Furthermore, the system complexity is greatly reduced, thereby greatly reducing the barrier to commercial implementation of the sealed redox battery 200A. For example, unlike conventional RFBs, the sealed redox battery 200A may be manufactured in packs similar to lithium-ion batteries for modularized implementation, rendering them more adapted for automation and mass production, without a need for intrusive construction that may be needed for installing conventional RFBs.

Hereinafter, the operating principle and aspects of the sealed redox battery 200A are described using an example of a sealed vanadium (V) redox battery, which is based on vanadium-based redox pairs. However, it will be understood that embodiments are not limited thereto, and the principles described herein may be applied to redox batteries according to various other redox pairs.

In a sealed V redox battery according to some embodiments, the first redox couple dissolved in the first or positive electrolyte of the first half cell 204A may be a $V^{4+}/V^{5+}$ redox couple, and the second redox couple dissolved in the second or negative electrolyte of the second half cell 204B may be a $V^{2+}/V^{3+}$ redox couple. The redox reactions during charging and discharging may be described using the following equations, where → denotes a discharge reaction direction and <-- denotes a charging reaction direction:

Second half cell / Negative electrode: $V^{2+} \longleftrightarrow V^{3+} + e^-$
First half cell / Positive electrode: $V^{5+} + e^- \longleftrightarrow V^{4+}$
Overall reaction: $V^{2+} + V^{5+} \longleftrightarrow V^{3+} + V^{4+}$

During charging, in the first half cell 204A, tetravalent vanadium ions $V^{4+}$ is oxidized to pentavalent vanadium ions $V^{5+}$, while in the second half cell 204B, trivalent ions $V^{3+}$ are reduced to bivalent ions $V^{2+}$. During discharging, in the first half cell 204A, pentavalent vanadium ions $V^{5+}$ is reduced to tetravalent vanadium ions $V^{4+}$, while in the second half cell 204B, bivalent ions $V^{2+}$ are oxidized to trivalent ions $V^{3+}$. While these redox reactions occur, electrons are transferred through an external circuit and certain ions diffuse across the ion exchange membrane or separator 112 to balance electrical neutrality of positive and negative half cells, respectively.

Other redox reactions may be implemented in the sealed redox battery 200A according to some embodiments. According to various embodiments, the first redox couple or the second redox couple includes ions of one or more of vanadium (V), zinc (Zn), bromine (Br), chromium (Cr), manganese (Mn), titanium (Ti), iron (Fe), cerium (Ce) and cobalt (Co). In some embodiments, the first and second redox couples include ions of the same metal, as in the sealed V redox battery as described above. In these embodiments, advantageously, mixing of the positive and negative electrolytes does not lead to cross-contamination of the electrolytes.

As described herein, an electrolyte of a redox battery is a solution that conducts current through ionization. The electrolyte serves to support the reduced and oxidized forms of a redox couple and also supports the corresponding cations and anions in order to balance the charge of the ions in solution during the oxidation and reduction of the redox couple. The positive and negative electrolytes according to some embodiments comprise an aqueous acidic solution. For a sealed V redox battery, the concentration of V ions relates to the energy density of the electrolytes. Higher energy density may advantageously serve to reduce the volume of the positive and negative electrolyte reservoirs 106A and 106B needed for a given amount of energy and power output. However, the concentration of V ions that is too high may lower the stability of the V ions. Thus, there is an optimum range of V ions for a given application. For example, vanadium ions dissolved in the one or both of the first and second electrolyte may be greater than 1.0 M, 1.5 M, 2.0 M, 2.5 M or a value in a range defined by any of these values. On the one hand, V ion concentrations that are lower than 1.0 M may result in energy levels that are not suitable for some applications. On the other hand, V ion concentrations that are greater than 2.5 M may result in lower stability of the $V^{5+}$ ions, e.g., at operating temperatures above 50 °C, and may approach the solubility limit of $V^{2+}$ and $V^{3+}$ ions in the electrolyte, e.g., at operating temperatures below -20 °C.

Advantageously, according to some embodiments, the positive and negative electrolytes may include the same solvent(s) and/or ions of the same metal. In these embodiments, mixing of the positive and negative electrolytes through the ion exchange membrane or separator 112 does not result in contamination of the respective half cells. In addition, the positive and negative electrolytes may be prepared from the same starting solvent(s) and solute(s). For example, for a sealed V redox battery according to some embodiments, both the positive and negative electrolytes comprise sulfuric acid. The electrolytes may be prepared by, e.g., dissolving 0.1 M to 2.5 M $VOSO_4$ (vanadyl sulfate) in 0.1 M to 6 M $H_2SO_4$ in aqueous solution, to form tetravalent vanadium ions ($V^{4+}$) and/or trivalent vanadium ions ($V^{3+}$). The tetravalent/trivalent vanadium ions may be electrochemically oxidized to form the positive electrolyte (catholyte), which contains a solution of pentavalent vanadium ions ($V^{5+}$). Conversely, the tetravalent/trivalent vanadium ions may be electrochemically reduced to form the negative electrolyte (anolyte), which contains a solution of a divalent vanadium ions ($V^{2+}$).

Still referring to FIG. 2A, in various embodiments, the positive and negative electrodes disposed in the positive and negative electrolyte reservoirs 106A and 106B, respectively, include carbon-based materials, such as carbon or graphite felts, carbon cloth, carbon black, graphite powder and graphene, to name a few. The carbon-based materials advantageously provide relatively high operation range, good stability and a high reversibility. The electrodes are optimized for relatively high electrochemical activity, low bulk resistivity and large specific area. The improvement of the electrochemical activity of the electrode increases the energy efficiency of the sealed redox battery 200A. To improve the performance of the sealed redox battery 200A, the surfaces of the electrode may be modified, e.g., by coating with a metal, increasing surface roughness, or doping with additives.

The positive and negative electrolyte reservoirs 106A and 106B defining the reaction spaces are partly or entirely filled with respective electrodes between the ion exchange membrane or separator 112 and the first and second bipolar plates 208A and 208B respectively when present, or between the ion exchange membrane or separator 112 and the positive and negative-electrode current collectors 108A and 108B respectively. The remaining spaces of the positive and negative electrolyte reservoirs 106A and 106B after filling with respective electrodes are partly or entirely filled with respective electrolytes between the ion exchange membrane or separator 112 and the first and second bipolar plates 208A and 208B when present, or between the ion exchange membrane or separator 112 and the positive and negative-electrode current collectors 108A and 108B. In various embodiments, except when intentionally perforated or rendered porous, the ion exchange membrane or separator 112 serves to substantially separate the two half-cells, and to substantially prevent the mixing of the two electrolytes and the redox couples, while allowing the transport of ions such as $H^+$ to balance the charge between the two half cells to complete the circuit during passage of current. The ion exchange membrane or separator 112 may be an anion exchange membrane or a cation exchange membrane.

While various illustrated embodiments include an ion exchange membrane or separator 112 that may be selective to a particular type of ion, e.g., a cation or an anion, embodiments are not so limited. For example, in various embodiments, the ion exchange membrane or separator 112 may be a non-selective membrane, e.g., a porous membrane.

Still referring to FIG. 2A, in some embodiments, the output power may be scaled by connecting a number of single redox battery cells to each other, e.g., in a series manner to form a cell stack. In these configurations, the first and second bipolar plates 208A and 208B may facilitate the series connection of the single cells and the current collectors 108A and 108B between adjacent bipolar plates may be removed. The first and second bipolar plates 208A and 208B may be made of a suitable material such as graphite, carbon, carbon plastic or the like to provide high electrical conductivity and low internal resistance of the cell stack. Additionally, the first and second bipolar plates 208A and 208B support the contact pressure to which they are subjected when pressed against the electrodes to increase electrical conductivity. In addition, the first and second bipolar plates 208A and 208B are provided to have high acid resistance to prevent corrosion or oxidation of the current collectors 108A and 108B.

Each of the positive and negative-electrode current collectors 108A and 108B includes a metal having high electrical conductivity, such as copper or aluminum, and serves to flow electrical current during the charging and discharging processes.

As a single sealed redox battery 200A as described above has an output voltage that is characteristic of the electrochemical reaction, e.g., about 1.65 V or lower, additional cells may be connected to each other in electrical series or in electrical parallel to achieve higher voltages and currents, respectively, as described herein.

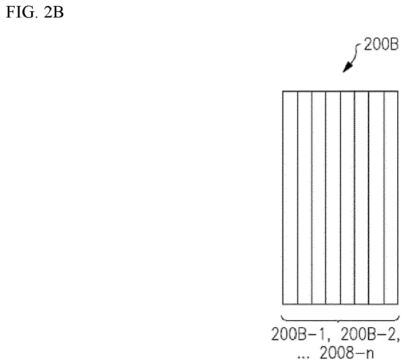

FIG. 2B is a schematic illustration of a sealed redox battery including a plurality of sealed redox battery cells in a stacked structure, according to some embodiments. The illustrated sealed redox battery 200B includes a plurality of redox battery cells 200B-1, 200B-2,..., 200B-n, which may be stacked, where each cell is configured in a similar manner as the sealed redox battery 200A (FIG. 2A). Each of the plurality of redox battery cells 200B-1, 200B-2,..., 200B-n includes the positive electrolyte reservoir 106A, the negative electrolyte reservoir 106B and the ion exchange membrane or separator 112. In the illustrated embodiment, each of the plurality of redox battery cells 200B-1, 200B-2,..., 200B-n is enclosed by a separate casing 212. The plurality of redox battery cells 200B-1, 200B-2,..., 200B-n may be connected to each other in electrical series to increase the output voltage.

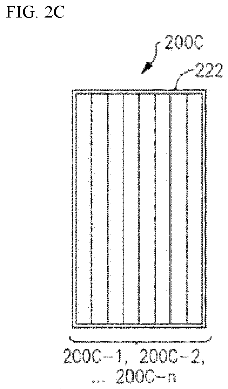

FIG. 2C is a schematic illustration of sealed redox battery including a plurality of sealed redox battery cells in a stacked structure, according to some further embodiments. The illustrated sealed redox battery 200C includes a plurality of redox battery cells 200C-1, 200C-2,..., 200C-n, which may be stacked, where each of the plurality of redox battery cells 200C-1, 200C-2,..., 200C-n is configured in a similar manner as the sealed redox battery 200A (FIG. 2A) including the positive electrolyte reservoir 106A, the negative electrolyte reservoir 106B and the ion exchange membrane or separator 112. However, unlike the sealed redox battery 200B (FIG. 2B), in the illustrated embodiment, the plurality of redox battery cells 200C-1, 200C-2,..., 200C-n are enclosed by a common casing 222. In a similar manner as the sealed redox battery 200B (FIG. 2B), the plurality of redox battery cells 200C-1, 200C-2,..., 200C-n may be connected to each other in electrical series to increase the output voltage. Furthermore, in some embodiments, the positive electrolyte reservoirs 106A of the plurality of redox battery cells 200C-1, 200C-2,...200C-n may be in fluidic communication with each other, and the negative electrolyte reservoirs 106B of the plurality of redox battery cells 200C-1, 200C-2,..., 200C-n may be in fluidic communication with each other. The sealed redox battery 200C may be embodied as a pouch type redox battery or a rigid case type redox battery.

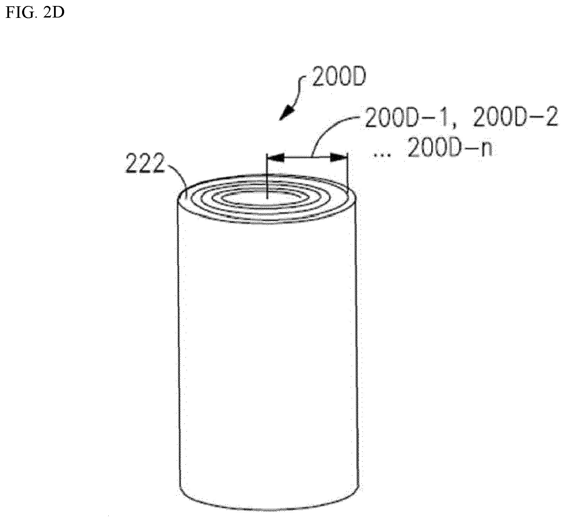

FIG. 2D is a schematic illustration of a sealed redox battery including a plurality of sealed redox battery cells in a cylindrically stacked structure, according to some still further embodiments. The illustrated sealed redox battery 200D includes a plurality of redox battery cells 200D-1, 200D-2,..., 200D-n, which may be cylindrically stacked, where each of the plurality of redox battery cells 200D-1, 200D-2,..., 200D-n is configured in a similar manner as the sealed redox battery 200A (FIG. 2A), including the positive electrolyte reservoir 106A, the negative electrolyte reservoir 106B and the ion exchange membrane or separator 112. The plurality of redox battery cells 200D-1, 200D-2,..., 200C-n may individually be enclosed in a casing in a similar manner as described above with respect to the sealed redox battery 200B (FIG. 2B). Alternatively, the plurality of redox battery cells 200D-1, 200D-2,..., 200C-n may be enclosed by a common casing 222 in a similar manner as described above with respect to the sealed redox battery 200C (FIG. 2C). In a similar manner as the sealed redox batteries 200B (FIG. 2B), the plurality of redox battery cells 200D-1, 200D-2,..., 200D-n may be connected to each other in electrical series to increase the output voltage. Furthermore, in some embodiments, the positive electrolyte reservoirs 106A of the plurality of redox battery cells 200D-1, 200D-2,..., 200D-n may be in fluidic communication with each other, and the negative electrolyte reservoirs 106B of the plurality of redox battery cells 200D-1, 200D-2,..., 200D-n may be in fluidic communication with each other.

It will be appreciated that some or all of the plurality of redox battery cells in each of the stacked structures as described above with respect to FIGS. 2B to 2C may be connected to each other in an electrical series manner, by suitably electrically connecting current collectors of opposite polarities of some or all of the cells to each other, or may be connected to each other in an electrical parallel manner, by suitably electrically connecting current collectors of the same polarity of some of all of the cells to each other.

Distinctions of sealed redox battery compared to conventional secondary batteries

The distinctions and advantages of sealed redox batteries according to some embodiments against conventional RFBs have been as described above, including the omission of electrolyte tanks, a pumping system and a network of conduits, which have contributed to the slow commercial implementation of conventional RFBs. While no separate electrolyte tanks may be present, the sealed redox batteries 200A to 200D (FIGS. 2A to 2D) retain some of the unique design flexibility available in conventional RFBs. For example, due to the intrinsic conformability of liquids, the design of cell geometry is substantially more flexible compared to conventional secondary batteries. Moreover, the power and energy storage capacity may be decoupled and scaled independently to a limited extent, e.g., by adjusting the ratio of electrolyte volume relative to the electrode surface area. The ratio may be adjusted using, e.g., the thickness of the positive and negative electrolyte reservoirs 106A and 106B, as described above. On the other hand, the sealed redox batteries according to some embodiments also share major advantages of conventional batteries, because they are completely sealed to enable modularized implementation. While sealed redox batteries according to some embodiments and conventional secondary batteries, e.g., LIBs, may have components referred to using similar terminologies, it will be appreciated that the components of the sealed redox batteries according to some embodiments and their operational principles are distinguishable from those of conventional secondary batteries, as described herein.

Hereinafter, while comparisons may be made between sealed redox batteries according to some embodiments and LIBs, it will be understood that the comparisons are applicable to other conventional secondary batteries.

First, the structure, functional role and operational principle of the electrolytes in the sealed redox battery according to some embodiments are distinguishable from those of conventional secondary batteries, e.g., LIBs. In operation, in LIBs, the electrolyte does not itself store energy nor participate in the electrochemical reactions in the charge/discharge processes. Instead, the electrolyte in LIBs primarily serves to provide a path for lithium ions to be transported between the positive electrode and the negative electrode during the charging/discharging process. Therefore, the movement of the electrolyte is not substantially restricted by the separator. In contrast, in the sealed redox battery 200A according to some embodiments, electrochemical energy is stored in the electrolytes in the form of dissolved active material, e.g., respective redox pairs dissolved in the positive and negative electrolytes that undergo electrochemical reactions during the charge/discharge processes. Thus, the electrolytes may be said to be the medium which stores the energy in the sealed redox batteries according to some embodiments. In the example of V redox battery, as described above, the oxidation states of V ion species dissolved in the positive and negative electrolytes are changed by the respective half reactions. Thus, the chemical compositions of the positive and negative electrolytes in sealed redox batteries are different from the electrolyte of LIBs. Further unlike LIBs, in sealed redox batteries according to some embodiments, since the electromotive force resulting from the difference in the chemical compositions of the positive electrolyte and the negative electrolyte leads to energy storage, mixing of the positive and negative electrolytes leads to a loss of stored energy.

Second, the structure, functional role and operational principle of the electrodes in the sealed redox battery according to some embodiments are distinguishable from those of conventional secondary batteries, e.g., LIBs. In LIBs, the active materials, which are included in the electrodes, directly participate electrochemical reactions. In operation, in a LIB, lithium ions move between an active material of the positive electrode and an active material of the negative electrode to achieve electrochemical equilibrium, and the electrodes themselves serve as the main media for energy storage. In contrast, the electrodes of the sealed redox battery according to some embodiments serve a very different role. The positive electrode of a sealed redox battery does not participate in the first redox half reaction and the negative electrode of the sealed redox battery does not participate in the second redox half reaction. As described herein, an electrode that does not participate in a redox half reaction does not preclude the electrode's function of providing a physical site for the electrochemical reaction in an analogous manner as a catalyst. However, the electrodes themselves are not involved in the electrochemical reactions and redox ions do not move between positive and negative electrodes during charging and discharging of the redox battery. Depending on the composition, a functional group acting as a catalyst may exist on the surface. However, this is distinguishable from the electrodes actively participating in the electrochemical reaction as in the case with LIBs. Rather, the electrodes substantially passively transport electrons generated by the electrochemical reactions.

Third, the structure, functional role, and operational principle of the ion exchange membrane in the sealed redox battery according to some embodiments are distinguishable from those of a separator in conventional secondary batteries, e.g., LIBs. In a LIB, the active materials of electrodes where the electrochemical reactions take place are generally in the solid state, and a separator disposed between positive and negative electrodes primarily serves to prevent an electrical short therebetween. Thus, while the separator serves to prevent an electrical contact between the positive and negative electrodes, in a LIB the separator is not specifically designed to restrict the transport of lithium ions therethrough nor to restrict the electrochemical reactions therebetween. In other words, the separator in a LIB primarily serves to electrically insulate the positive and negative electrodes from each other without interfering the transport of ions as part of the electrochemical reactions for charging and discharging. Thus, a separator for a LIB is designed to freely transport the lithium ions between the electrodes. In contrast, in the sealed redox battery according to some embodiments, the redox active species are dissolved in the electrolyte, and the ion exchange membrane or separator 112 (FIG. 2A) serves to electrically separate the positive and negative electrolytes from each other and to prevent them from mixing with each other.

In general, the ion exchange membrane or separator 112 includes a selective permeable membrane in which cations or anions are transported therebetween to balance the charge between the two half cells. For example, the ion exchange membrane may be configured to selectively pass therethrough cations or anions. Thus, in sealed redox batteries according to some embodiments, since the electrolytes that store energy are liquids, without the ion exchange membrane or separator 112, an electrical short by mixing of the positive and negative electrolytes occurs, regardless of whether the positive and negative electrodes contact each other.

Therefore, in the sealed redox battery according to some embodiments, the first and second redox half reactions occur without substantial transfer of ions of the first redox couple or the second redox couple across the ion exchange membrane or separator 112 separating the positive electrolyte reservoir 106A and the negative electrolyte reservoir 106B.

As described herein, an ion exchange membrane or separator 112 that substantially does not transfer ions of the redox couples refers an ion exchange membrane or separator 112 that serves to substantially prevent the crossover of the electrolytes between the positive and negative electrolyte reservoirs 106A and 106B (FIG. 2A). Thus, a base material for the ion exchange membrane or separator 112 may desirably be a membrane that blocks the movement of the redox species in the electrolyte, e.g., the V ions in a V redox battery, while selectively permitting the movement of other ions, e.g., $H^+$ ions in a V redox battery for the charge balance between the half cells. However, an ion exchange membrane or separator 112 that substantially does not transfer ions of the redox couples may still permit unintended crossover, or limited intended mixing to relieve internal pressure build-up.

Method for preparing polybenzimidazole solution, polybenzimidazole-based separator, and method for manufacturing the same

As described above, the ion exchange membranes or separators serve the functions of, among other functions, conducting ions of the supporting electrolyte between positive and negative electrolyte reservoirs while substantially suppressing passage of redox-active ions, e.g., vanadium ions. To further enhance the performance of redox battery cells, there is a need for further improvement in membranes or separators to achieve, among other improvements, one or more of lowering the ionic resistance to enable operation at higher current densities, improving the barrier properties, balancing net electrolyte transport to minimize capacity imbalance, and enhancing the chemical stability of the membrane or separator material. Of course, these improvements should desirably be achieved while remaining cost competitive to existing membrane technologies.

To address these and other needs, according to some embodiments, membranes or separators and methods of fabricating the same employ polybenzimidazole (PBI). Among other advantageous properties, PBI has a high chemical stability against oxidative and/or acidic electrolytes that are used in redox battery cells. In contact with aqueous sulfuric acid used in the electrolyte, the imidazole groups of the PBI are protonated and PBI becomes positively charged, such that the PBI exhibits ion exchange characteristics.

According to various embodiments, an ion-exchange membrane or separator (e.g., ion exchange membrane or separator 112 in FIG. 2A) includes the PBI and has the structure and composition exhibiting superior chemical resistance, heat resistance and mechanical strength, among other advantages, relative to various membranes that may be commercially available.

In particular, it will be appreciated that various embodiments of the ion exchange membrane or separator as disclosed herein are particularly effective when integrated as part of a sealed redox battery (e.g., the ion exchange membrane or separator 112 in FIG. 2A). This is because, among other things, sealed redox batteries may be subject to harsher conditions including higher internal pressure, which existing membranes may not be adapted to withstand effectively and reliably. However, it will be understood that embodiments of separators are not limited to use in sealed redox batteries, and the ion exchange membrane or separator disclosed herein may advantageously be integrated for use in redox flow batteries, e.g., a redox flow battery 100 as described above with respect to FIG. 1, as well as any suitable secondary battery including lithium ion batteries.

When preparing the polybenzimidazole (PBI) solution, a PBI precursor is dissolved in an amide-based organic solvent. For example, as an amide-based organic solvent, at least one of N,N-dimethylacetamide (DMAc) and dimethylformamide can be used, and preferably N,N-dimethylacetamide is used. However, the solubility of the PBI precursor in the organic solvent may be relatively low. As a result, the preparation efficiency of the PBI solution may be low, which in turn results in low manufacturing efficiency of manufacturing a separator using polybenzimidazole. Therefore, there is a need to increase the solubility or solubility of the PBI precursor in the organic solvent.

According to one aspect of the present disclosure, a method for preparing a polybenzimidazole solution includes preparing a polybenzimidazole precursor having an average particle size of 300 $\mu$m or smaller. The method additionally includes dissolving the polybenzimidazole precursor in an amide-based organic solvent under a high temperature condition of 140° C or higher and/or a pressure condition of 0.1 MPa or higher.

According to embodiments, the polybenzimidazole precursor may be dissolved in a high percentage of 8 to 20 wt.% with respect to 100 wt% of the amide-based organic solvent. Conventionally, when the polybenzimidazole precursors with an average particle diameter exceeding 300 $\mu$m are dissolved in the amide-based organic solvent, the solubility thereof in the organic solvent is limited to approximately 2 to 5% by weight. Accordingly, the preparation efficiency of the polybenzimidazole solution according to the method of the present disclosure may be significantly improved compared to existing methods.

In accordance with the present disclosure, it is identified that the solubility of the polybenzimidazole precursor in the organic solvent may be increased by uniformizing and more finely controlling the particle size of the polybenzimidazole precursor. From this point of view, the average particle diameter of the polybenzimidazole precursor is preferably in a range of 300 $\mu$m or smaller, and more preferably 200 to 300 $\mu$m or smaller. Conventionally, the polybenzimidazole precursors have a particle size of about 600 to 1000 $\mu$m, and are sold with non-uniform particle sizes. Therefore, a grinding step is included to control the particle size as described above. For efficient grinding, the polybenzimidazole precursor is brought in a frozen state, and can be subjected to grinding in this state. In accordance with the present disclosure, particles passing through a sieve with mesh opening of 300 $\mu$m are considered as particles with an average particle size of 300 $\mu$m or smaller. In accordance with the present disclosure, providing polybenzimidazole precursor particles with a defined average particle size preferably comprises sieving polybenzimidazole precursor particles one or more times, e.g. three times, through a sieve having the size of sieve openings corresponding to the desired average particle size .

Furthermore, adjusting the dissolution conditions of the polybenzimidazole precursor to high temperature and/or high pressure may allow the solubility thereof in the organic solvent to be increased to 20% by weight. For example, the solubility may be adjusted to 8 to 18% by weight, for example. The solubility may be adjusted to 8 to 12% by weight.

The high temperature as the dissolution condition may be, for example, in a range of 140°C or higher, for example, 140°C or higher, for example, may be 160°C or higher, and may be, for example, 180°C or higher. However, in terms of process efficiency of heat source supply, the high temperature may be adjusted in a range below approximately 200°C.

The high pressure as the dissolution condition may be, for example, atmospheric pressure (approximately 0.1 MPa) or higher, for example, 0.15 MPa or higher. However, the high pressure may be adjusted in a range of approximately 0.1 to 0.2 MPa in terms of process efficiency in generating a high pressure condition.

The polybenzimidazole precursor in accordance with the present disclosure is a polybenzimidazole polymer, and may be a mixture or co-polymer of different polybenzimidazole polymers. For example, the polybenzimidazole precursor may be ab-PBI (Poly(2,5-benzimidazole)), oPBI (Poly[2,2'-(4,4'-oxybis(1,4-phenylene))-5,5'-bibenzimidazole), m-PBI (meta-polybenzimidazole), pPBI (para-polybenzimidazole), s-PBI (sulfonated polybenzimidazole), f-PBI (fluorine-containing polybenzimidazole), 2OH-PBI (Dihydroxy polybenzimidazole), PIPBI (Phenylindane-polybenzimidazole), PBI-OO (poly[(1-(4,4'-diphenylether)-5-oxybenzimidazole)-benzimidazole]), etc., or a mixture or co-polymer of two or more thereof. However, the present disclosure is not limited thereto.

According to another aspect of the present disclosure, a polybenzimidazole-based separator may be manufactured using a solution containing the polybenzimidazole prepared by the method for preparing the polybenzimidazole solution as described above. According to an embodiment of the present disclosure, a method for manufacturing a polybenzimidazole-based separator includes dissolving the polybenzimidazole precursor in an organic solvent to produce a polybenzimidazole-containing solution; coating the polybenzimidazole-containing solution on a base substrate to form a liquid film thereon; removing the organic solvent from the liquid film in a drying manner to convert the liquid film to a solid film; and removing the solid film from the base substrate to obtain a polybenzimidazole-based separator as the solid film.

In this regard, any scheme of coating the solution containing polybenzimidazole on the base substrate may be adopted without particular limitations. For example, a slot die coating scheme may be applied as the scheme of coating the solution containing polybenzimidazole on the base substrate. The base substrate may include a PE (polyethylene) substrate, a PET (polyethylene terephthalate) substrate, a PP (polypropylene) substrate, a PTFE (polytetrafluoroethylene) substrate, an ePTFE (expanded polytetrafluoroethylene) substrate, a PI (polyimide) substrate, or a PEEK (polyetheretherketone) substrate. However, the present disclosure is not limited thereto. A thickness of the base substrate may be in a range of approximately 5 to 200 $\mu$m. However, the present disclosure is not necessarily limited thereto, and the thickness may be selected to vary depending on the type of the base substrate as selected. For example, the thickness of the PE substrate may be in a range of 5 to 30 $\mu$m. The thickness of the PET substrate may be in a range of 50 to 200 $\mu$m.

As previously described, the method for preparing the polybenzimidazole solution according to the present disclosure has the advantage of greatly increasing the solubility of the polybenzimidazole precursor in the organic solvent. Accordingly, when inputting the solution containing the polybenzimidazole to a coater to manufacture the separator, a film forming rate may be increased. Even when manufacturing a thick separator, not only may the number of process repetitions be reduced, but also a solvent drying time may be reduced, thereby improving process efficiency. The drying process may be performed, for example, using hot air, infrared rays, or UV curing.

As the thickness of the polybenzimidazole-based separator becomes smaller, there is an advantage in that voltage efficiency increases and ion exchangeability increases, whereas there may be a problem of lowering mechanical strength or increasing the self-discharge rate of the secondary battery due to increased crossover and osmosis phenomena. In this respect, the thickness of the polybenzimidazole-based separator according to the present disclosure may range, for example, from 2 to 30 $\mu$m, for example, from 5 to 25 $\mu$m, for example, from 10 to 20 $\mu$m.

In accordance with the present disclosure, the thickness of the polybenzimidazole-based separator refers to a value obtained by subtracting a thickness of the base substrate from a thickness of a final product of the polymenzimidazole-based separator formed on the base substrate.

Hereinafter, an example of the present disclosure is described. However, the following example is merely an implementation of the present disclosure, and the present disclosure is not limited thereto.

<Present Examples 1 to 3 and Comparative Examples 1 to 2>

m-PBI as the polybenzimidazole precursor was added to dimethyl acetamide (DMAc) as the organic solvent, and then was dissolved therein under stirring for 24 hours under predetermined temperature and pressure conditions as shown in Table 1 below. Thus, the polybenzimidazole-containing solution was prepared. Then, using a slot die coater, the polybenzimidazole-containing solution was applied on one surface of the PET substrate (thickness 100 $\mu$m) as the base substrate. The liquid film was formed thereon. Then, the organic solvent was removed from the liquid film in the drying manner to convert the liquid film to a solid film. The solid film is removed from the base substate. Thus, the polybenzimidazole-based separator (thickness 20 $\mu$m) as the removed solid film was manufactured.

Operating conditions of the slot die coater were as follows: a web speed of 0.1 to 10 m/min, and a web tension of up to 10 kgf. The drying process was carried out as follows: hot air drying was performed at a temperature of 50°C for 2 minutes and then was performed at a temperature of 70°C for 2 minutes.

In this regard, 300 $\mu$m as shown in Table 1 below refers to the m-PBI powders as the polybenzimidazole precursor whose the average particle diameter is 300 $\mu$m. This sample was prepared by performing a dry pulverization process of the powders using a mixer, and then, selecting the m-PBI powders having a size of 300 $\mu$m or smaller using a standard sieve. 1000 $\mu$m as shown in Table 1 below refers to the m-PBI powders as the polybenzimidazole precursor whose the average particle diameter is 1000 $\mu$m. This sample refers to powders that have not been pulverized in the above manner.

The average particle size, dissolution temperature, pressure, and maximum solubility of polybenzimidazole in DMAc are shown in Table 1 below. Furthermore, a film forming rate (m/min) of the polybenzimidazole-based separator (based on a thickness of 20 $\mu$m) was calculated according to a following Equation (1) and a maximum value thereof is shown in Table 1 below.

Equation (1)

$$S = \frac{F \times A}{T\,(Lip) \times L\,(Lip)} \times \frac{A}{V\,(PBI)}$$

In the above Equation (1), S denotes the film forming rate (m/min), F denotes a force ([N (kg·m/s$^2$)]) required to move the base substrate, A means a distance (m) between a coating roll and a slot die, T(Lip) denotes a thickness (m) of a die lip of the slot die coater, L(Lip) denotes a length (m) of the die lip of the slot die coater, and V(PBI) denotes a viscosity [(cps(g/cm·s$^2$)) of the PBI solution.

Table 1

| | Present Example 1 | Present Example 2 | Present Example 3 | Comparative Example 1 | Comparative Example 2 |
|---|---|---|---|---|---|
| Average Particle Size ($\mu$m) | 300 | 300 | 300 | 300 | 1000 |
| Temperature (°C) | 200 | 160 | 140 | 120 | 100 |
| Pressure (MPa) | 0.2 | Atmospheric | Atmospheric | Atmospheric | Atmospheric |
| Maximum solubility (wt.%) | 20 | 12 | 10 | 6 | 4 |
| Maximum film-forming rate based on thickness of 20 $\mu$m (m/min) | 1.2 | 0.8 | 0.6 | 0.4 | 0.3 |

As may be seen in the Table 1, in Present Examples 1, 2, and 3 which satisfy that the average particle diameter of the PBI precursor is 300 $\mu$m and the dissolution temperature is 140°C or higher, the maximum solubilities of the PBI precursor are 20 wt%, 12 wt%, and 10 wt%, respectively, as a high solubility. It is identified that the higher the solubility of the PBI, the higher the maximum film forming rate in manufacturing the separator, thereby increasing the process efficiency. It is identified that, in Present Example 1 in which the dissolution pressure condition is 0.2 MPa which is higher than atmospheric pressure (0.1 MPa), the solubility and thus the film forming rate are the highest.

On the other hand, it may be identified that in Comparative Example 1 which satisfies that the average particle diameter of the PBI precursor is 300 $\mu$m, and in which the dissolution temperature is 120°C, and thus which does not satisfy the dissolution temperature condition as defined in the present disclosure, the maximum solubility is 6 wt%, which is only a value in a conventional approach. Further, it may be identified that the maximum film forming rate in Comparative Example 1 is also lower than those in Present Examples.

In addition, it may be identified that in Comparative Example 2 in which the average particle diameter of the PBI precursor is 1000 $\mu$m, and thus which does not satisfy that the average particle diameter of the PBI precursor is 300 $\mu$m, and in which the dissolution temperature is 100°C, and thus which does not satisfy the dissolution temperature condition as defined in the present disclosure, the maximum solubility is 4 wt%, which is very low. Further, it may be identified that the maximum film forming rate in Comparative Example 2 is also significantly low.

Although the embodiments of the present disclosure have been described in more detail with reference to the accompanying drawings, the present disclosure is not necessarily limited to these embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of the present disclosure is not limited by these embodiments. Therefore, it should be understood that the embodiments described above are not restrictive but illustrative in all respects.

**Claims**

1.    A method for preparing a polybenzimidazole solution, the method comprising:

   preparing at least one type of a polybenzimidazole (PBI) precursor having an average particle size of 300 $\mu$m or smaller; and
   dissolving the PBI precursor in an amide-based organic solvent under a temperature condition of 140°C or higher and/or a pressure condition of 0. 1 MPa or higher.

2.    The method according to claim 1, wherein the average particle size of the PBI precursor is in a range of 200 to 300 $\mu$m.

3.    The method according to claim 1 or 2, wherein dissolving the PBI precursor in the amide-based organic solvent includes dissolving the PBI precursor in the amide-based organic solvent under a temperature condition of 140 to 200°C.

4.    The method according to any one of claims 1 to 3, wherein dissolving the PBI precursor in the amide-based organic solvent includes dissolving the PBI precursor in the amide-based organic solvent under a pressure condition of 0. 1 to 0.2 MPa.

5. The method according to any one of claims 1 to 4, wherein a maximum solubility of the PBI precursor in the amide-based organic solvent is in a range of 8 to 20% by weight, based on 100% by weight of the amide-based organic solvent.

6. The method according to any one of claims 1 to 5, wherein the organic solvent includes dimethylacetamide.

7. A method for manufacturing a polybenzimidazole-based separator, the method comprising:

dissolving a polybenzimidazole (PBI) precursor in an amide-based organic solvent to produce a polybenzimidazole-containing solution;
coating the polybenzimidazole-containing solution on a base substrate to form a liquid film thereon;
removing the organic solvent from the liquid film in a drying manner to convert the liquid film to a solid film; and
removing the solid film from the base substrate to obtain a polybenzimidazole-based separator as the solid film,
wherein the average particle size of the PBI precursor is equal to or smaller than 300 $\mu$m,
wherein dissolving the PBI precursor in the amide-based organic solvent is carried out under a temperature condition of 140°C or higher and/or a pressure condition of 0.1 MPa or higher.

8. The method according to claim 7, wherein a thickness of the polybenzimidazole-based separator is in a range of 2 to 30 $\mu$m.

9. The method according to claim 7 or 8, wherein the base substrate is one of a PE (polyethylene) substrate, a PET (polyethylene terephthalate) substrate, a PP (polypropylene) substrate, a PTFE (polytetrafluoroethylene) substrate, an ePTFE (expanded polytetrafluoroethylene) substrate, a PI (polyimide) substrate, and a PEEK (polyetheretherketone) substrate.

10. A polybenzimidazole-based separator manufactured according to the method of one of claims 7 to 9.

11. A secondary battery comprising a polybenzimidazole-based separator manufactured according to the method of one of claims 7 to 9.

FIG. 1

FIG. 2A

FIG. 2B

200B

200B-1, 200B-2,
... 2008-n

FIG. 2C

FIG. 2D

Europäisches
Patentamt

European
Patent Office

Office européen
des brevets

# EUROPEAN SEARCH REPORT

Application Number

EP 23 21 4893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 426 224 C (CELANESE VENTURES GMBH [DE]) 22 July 2008 (2008-07-22) | 1-9 | INV.<br>H01M8/103 |
| A | * page 12 – page 13; claim all * | 10,11 | H01M8/18<br>H01M10/0525 |
| X | KR 2014 0142036 A (UNIV SOGANG RES FOUNDATION [KR]) 11 December 2014 (2014-12-11) | 1-9 | H01M50/403<br>H01M50/414 |
| A | * paragraph [0008]; claim all; example 1 * | 10,11 | |
| X | MARA IKHSAN MUHAMMAD ET AL: "Polybenzimidazole membranes for vanadium redox flow batteries: Effect of sulfuric acid doping conditions", CHEMICAL ENGENEERING JOURNAL, ELSEVIER, AMSTERDAM, NL, vol. 435, 29 January 2022 (2022-01-29), XP086974024, ISSN: 1385-8947, DOI: 10.1016/J.CEJ.2022.134902 [retrieved on 2022-01-29] * page 2 – page 3 * | 1-11 | |

TECHNICAL FIELDS
SEARCHED    (IPC)

H01M

The present search report has been drawn up for all claims

| Place of search | Date of completion of the search | Examiner |
|---|---|---|
| Munich | 2 April 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4893

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2024

| Patent document cited in search report | | Publication date | Patent family member(s) | | Publication date |
|---|---|---|---|---|---|
| CA 2426224 | C | 22-07-2008 | AT | E392446 T1 | 15-05-2008 |
| | | | BR | 0114739 A | 23-12-2003 |
| | | | CA | 2426224 A1 | 17-04-2003 |
| | | | CN | 1503817 A | 09-06-2004 |
| | | | DE | 10052237 A1 | 01-08-2002 |
| | | | DK | 1330485 T3 | 07-07-2008 |
| | | | EP | 1330485 A1 | 30-07-2003 |
| | | | KR | 20030063365 A | 28-07-2003 |
| | | | MX | PA03003533 A | 07-08-2003 |
| | | | US | 2004127633 A1 | 01-07-2004 |
| | | | WO | 0236661 A1 | 10-05-2002 |
| KR 20140142036 | A | 11-12-2014 | NONE | | |

EPO FORM P0459

For more details about this annex : see Official Journal of the European Patent Office, No. 12/82